(19) **Europäisches Patentamt**

**European Patent Office**

**Office européen des brevets**

(11) **EP 1 718 060 A1**

(12) **EUROPEAN PATENT APPLICATION**

(43) Date of publication:
**02.11.2006 Bulletin 2006/44**

(51) Int Cl.:
*H04N 1/32* (2006.01)

(21) Application number: **06112794.0**

(22) Date of filing: **20.04.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **25.04.2005 US 113607**

(71) Applicant: **Xerox Corporation
Rochester,
New York 14644 (US)**

(72) Inventors:
 • **Willamowski, Jutta
   38100, Grenoble (FR)**
 • **Arregui, Damian
   38000, Grenoble (FR)**
 • **Csurka, Gabriela
   38920, Crolles (FR)**

(74) Representative: **Skone James, Robert Edmund
Gill Jennings & Every LLP
Broadgate House
7 Eldon Street
London EC2M 7LH (GB)**

(54) **Digital watermarking of the digital documents in a set of digital documents**

(57)    A method which can be utilized for protecting the integrity of a set of digital documents includes, for each of the digital documents in the set, extracting (S100) information from the document, incorporating (S120) the information into a watermark, and embedding (S136) the watermark into at least one other document in the set.

FIG. 1

**Description**

The present invention relates generally to watermarking of documents.

Digital cameras, video recorders, scanners, and other digital systems are now widely used for generating digital media in the form of images, digital audio recordings, and combined forms of these media. In the legal domain, digital systems have been adopted to document forensic scenes, accidents, and the like. One problem with this approach is that existing tools allow ready modification of the content of digital media, often in such a way that the modification is not visible to the human eye in the absence of the original. Once a digital image is created by a camera or other digital system, it becomes a data file that is essentially a string of binary bits. Like other types of computer file, an image data file may have appended to supplementary meta-data that describes its origin. However, both the image data and the meta-data are easily altered. Even with a close examination of the data or image stored in the data, detection of alterations can be difficult. As a result, digital images are not always considered to be sufficiently reliable to use in law enforcement or as legal documentation, particularly for evidence in court.

One solution to this problem has been to use digital watermarking. Digital watermarking is a process for modifying media content to embed a machine-readable code (a "watermark") into the data content. The data may be modified such that the embedded code is imperceptible or nearly imperceptible to the user, yet may be detected through appropriate computation. Different algorithms for digital watermarking exist and have different characteristics in terms of robustness to image manipulations. For example, fragile watermarks can be embedded in digital images. Modifying such watermarked images destroys the watermark. More robust watermarks allow certain prescribed modifications, such as rotation or resizing to be performed without destroying the watermark. Digital watermarking systems have two primary components: an embedding component that embeds the watermark in the media content, and a reading component that detects and reads the embedded watermark. To group related images, a common watermark, which is derived from one image, typically, the initial or principal member image of the group is sometimes used.

Watermarking techniques often involve computing a hash value or simply a "hash" for the image by applying a hash function to the image. Once the hash is computed, a watermark is generated from the hash using a private key and a digital signature algorithm. The computed hash value can be accessed using a public key by extracting and decoding the embedded watermark. To determine whether the watermarked image has been tampered with, it is sufficient to compute the hash value of the watermarked image in similar way as for the original and compare with the accessed hash value. A difference in the hash values indicates that the image has been modified.

Examples of digital watermarking processes are described in US-A-5499294, US-A-6269446 and US-A-6664976.

In one aspect of the exemplary embodiment, a method includes, for each of the digital documents in a set, extracting information from the document, incorporating the information into a watermark, and embedding the watermark into at least one other document in the set.

The extracting of the information may include applying a hash function to at least a portion of the document to form a hash. The hash function may be encrypted with a private key, the private key being associated with a public key for decrypting the encrypted hash function. The hash function may be applied to a plurality of the documents in the set to form the hash. The documents in the set may be in the form of images, text, video, audio, or combinations thereof. The documents in the set may be related to a specific event or form a chronological sequence. The documents in the set may be considered to form a sequence, the first and last documents being considered to be adjacent in the sequence and for each document in the set, the embedded watermark may be derived from a document which is equally spaced in the sequence from the document. For example, the embedded watermarks may form a ring in which each document in the set is embedded with a watermark derived from at least one of the preceding document in the set and the subsequent document in the set. Each document in the set may include a watermark derived from at least another document in the set. After the watermarks are embedded, the completeness of the set may be detectable through an examination of the watermarks of residual documents in the set.

In each document an image identifier generated by extracting information from the document and incorporating the information into the image identifier may be embedded. The watermark of each document in the set may thus include the image identifier of another document in the set. The embedding of the image identifier may be performed at the time of capture of the document.

A plurality of sets of documents may be linked by embedding the watermark of at least one document in one of the sets into at least one document of another of the sets. For each document, the method may include embedding information relating to the document as a watermark in the document.

The embedded information relating to a document may include at least one of a copyright notice, a global positioning system location, and a date on which the document was created. For a document from the set which is later missing or altered, the method may further include recovering information for the missing or altered document from the watermark embedded in the least one other document in the set.

In another aspect, a system includes a first watermarking component which, for each of the documents in a set of digital documents, derives a digital watermark from information in the document, and a second watermarking component, which embeds the digital watermark in another document in the set.

The first watermarking component may form a part of a digital document capturing device and may extract the information from the document at the time of generation of the document. The first and second watermarking components may both form a part of a digital document capturing device. The digital document capturing device may be selected from the group consisting of cameras, video recorders, audio recorders, scanners, and combinations thereof. The system may further include an authentication system which determines whether the set is complete by examination of the embedded watermarks of remaining documents in the set.

In another aspect, a method for determining the integrity of a set of digital documents includes watermarking a set of digital documents including, for each of the digital documents in the set, extracting information from the document, incorporating the information into a watermark, and associating the watermark with at least one other document in the set. The method further includes determining, from the embedded watermark of at least one of the plurality of digital documents, at least one of whether a document from which information was extracted is missing from the set, whether a document has been unacceptably modified, and whether a document has been added to the set subsequent to the embedding of the watermarks.

Some examples of methods and apparatus according to the present invention will now be described with reference to the accompanying drawings, in which:-

FIGURE 1 is a flow diagram of an exemplary method for protection and verification of the authenticity of a set of digital images;

FIGURE 2 is a schematic representation of a system for protection and verification of the authenticity of a set of digital images;

FIGURE 3 is a schematic representation of individual watermarking and set watermarking for a set of digital images according to an exemplary embodiment;

FIGURE 4 is schematic representation of set watermarking for a set of digital documents comprising different digital media according to a second exemplary embodiment;

FIGURE 5 is a schematic representation of digital watermarking for a hierarchy of document sets according to a third exemplary embodiment;

FIGURE 6 is a schematic representation of watermarking of documents relating to an event according to a fourth exemplary embodiment; and

FIGURES 7 and 8 show a schematic representation of watermarking of a set of documents according to a fifth exemplary embodiment.

Aspects of the exemplary embodiment disclosed herein relate to a system and method for protecting the integrity of a set of digital documents using digital watermarking. The documents in the set are generally capable of being separated from other documents in the set.

The method may include associating information from each of the documents forming the set with at least one other document within the set. In one embodiment, the information is embedded into another of the images in the set in the form of a digital watermark. Each document may have information from at least one other document embedded within it. The watermark may be encrypted using a public/private key system. While particular reference is made herein to digital images, it is to be appreciated that other forms of digital media are also contemplated, including text, video, audio, and combinations of these.

A system for protecting the integrity of documents may include a first watermarking component which generates a first watermark unique to the document from which it is derived (a document derived watermark) and a second watermarking component which links one document to at least one other document in the set, for example, by embedding a second watermark derived from the other document (a linking watermark). The system may also include an authentication system which subsequently verifies the completeness of the set.

In a variety of contexts, such as in the legal and law enforcement fields, it is not only desirable to ensure the legal credibility of individual digital images but also to provide an assurance that an image set is complete. For example, it is valuable to ensure that no image has been added, modified, or removed from a set.

Each image may be watermarked with an individual image identifier, a set identifier, and a link to the other set members such that the whole set is connected. This method enables a user subsequently to perform one or more of the following:

1. Detecting whenever an individual image belonging to the set has been tampered with;
2. Verifying the completeness of a given image set with respect to missing images and subsequently added images;
3. Identifying, for a given image, all other images from the same set;
4. Recovering at least a portion of the original content of images that have been tampered with; and

5. Recovering at least a portion of the original content of images that are missing from the set.

In one aspect, the method for watermarking sets of images watermarks each image in two stages. In the first stage, a first watermark is created (an "image identifier") which uniquely identifies and protects each image independently and prevents or makes evident any tampering with the image. In a second stage, a second watermark is created which contains information linking the images of the set together and may further include information which uniquely identifies an image set.

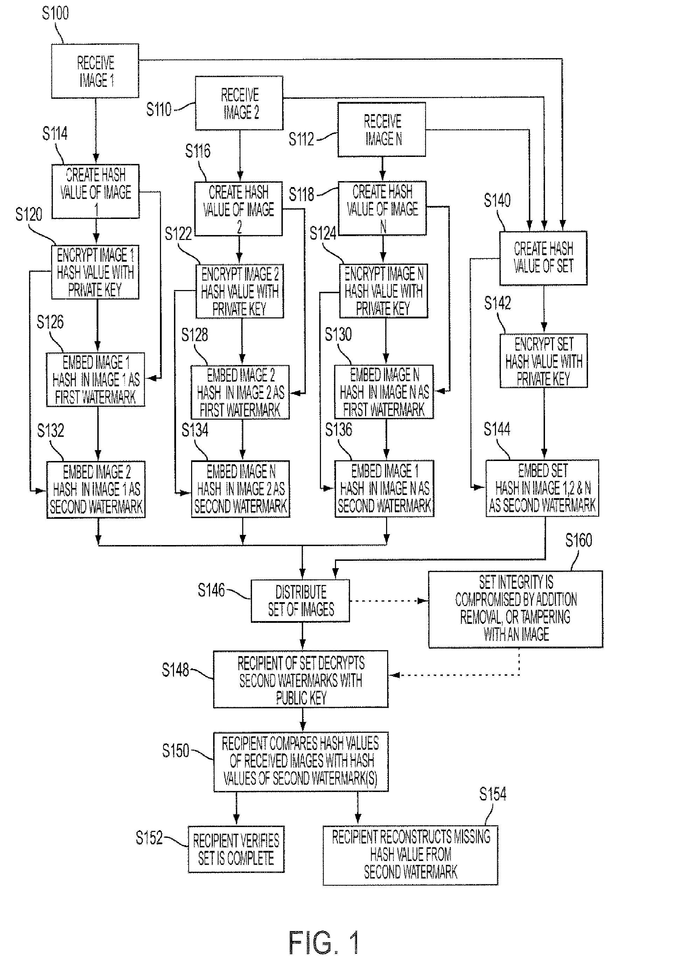

FIGURE 1 illustrates an exemplary process for watermarking documents and subsequent set verification. At steps S100, S110, S112, images 1, 2, ... N are received by a watermarking system, either independently or as a group, where N can be any number. At steps S114, S116, S118 information is extracted from images 1, 2, ... N. At steps S120, S122, S124 the extracted information from images1, 2, ... N is optionally encrypted. At steps S126, S128, S130 encrypted or unencrypted information from images 1, 2, ... N is optionally embedded as a first watermark in the respective images. At steps S132, S134, S136 encrypted or unencrypted information from images 1, 2, ... N is embedded as a second watermark in a different image from the image from which it was obtained. The information from a first image which is used to create the second watermark for a second image can be the same or different from the information from the first image which is used to create the first watermark embedded in the first image. For example, copyright information or GPS and date information may be embedded as a first watermark in the first image and a thumbnail of the first image embedded as the second watermark in the second image. As an alternative to steps S114-S136, at step S140 information is extracted from the set of images 1, 2, ... N, optionally encrypted at step S142, and embedded into every image in the set at step S144. At step S146 the watermarked set of images is distributed.

The watermark created in the first stage (steps S114-S124) may be derived from information extracted from the image or from complementary information (e.g., copyright notice, GPS location, and/or date). The information extracted may allow all or a portion of the image to be reconstructed from the watermark. The extracted information may be a compressed image or "thumbnail", or a randomized form thereof. The information extracted may be from the entire image or selected portions corresponding to important features. For example, the image may include a copyright notice or vehicle number plate and the information extracted includes sufficient information from which the copyright registration or registration number can be reconstructed. Selecting a particular feature or features of importance to embed may be a subjective decision, requiring human input, whereas less specific selections may be performed automatically. The information extracted, therefore, may allow a portion of the image content (the hash value) or the complementary information (copyright notice, GPS, date) to be reconstructed from the watermark.

To function effectively as a means for detection of image modification, the image identifier can be a tamper-resistant watermark, which is embedded in the image so that it is impossible, or at least difficult, to modify the watermark without the modification being detectable or visibly damaging the image.

The information may be extracted using a hash function (steps S114, S 116, S118). The hash function is a mathematical function which maps values from a large domain into a smaller range, thus having a compression component. The resulting hash is small enough in size that it can be embedded into the image without perceptibly altering the image. Reverse engineering an image from its hash value without access to the hash function is virtually impossible. A unique encrypted digital watermark can be created by encrypting the output of the hashing function using a private key (steps S120, S122, S124). Different keys can be used for encrypting the first and second watermarks. Alternatively, one or both watermarks is not encrypted.

The hash used for the present application may be a "soft hash," i.e., one which permits acceptable modifications, but which provides a different hash value if the image content has been modified. A JPEG compression for example, will modify more than one bit of the original image and generally it is desirable that such a modification will not be detected it as an attack. Furthermore the watermarked image should have the same hash as the original, which is not the case for "hard hash." Thus, the hash used is generally a "soft hash" rather than a "hard hash".

If the objective is to be sure that no content modification has been made but it is not necessary to recover the missing portion/image information, much more the image (e.g. color histograms or other image signatures as hash value) can be "compressed." An advantage of this is that when less information is embedded in the watermark, it can be detected and extracted more robustly. It can be compared with the watermarked image hash and any tampering with the image can be readily detected.

If the objective is to recover some information/content, then that information is embedded as hash in the watermark, eventually encrypted with the private or public key (the function depending on whether it is desired to make it visible after extraction or not).

Public key encryption employs two different keys: a private key, which may be held by the party creating the watermarks, and a corresponding public key, which need not be kept secret. Public key encryption techniques enable a recipient of the images to decrypt a watermark using a public key that is different from the one used by the creator to encrypt it, but mathematically related to it. The public key is generated based upon the private key, making the pair unique to each other.

In the process of encryption, the watermarked image is retained unaltered; only the image's hash is altered by encryption with the private key. In this way, the watermarked image file can be viewed by anyone, and each recipient may authenticate the image and the set of images by decrypting the image's unique watermark using the public key. If the hash of the decrypted watermark and hash of the image in question created by the same mathematical function match, the integrity of the image is assured. In the present exemplary embodiment, a hash function is used to compute an image identifier which serves as the first watermark, optionally with suitable encryption using a private key.

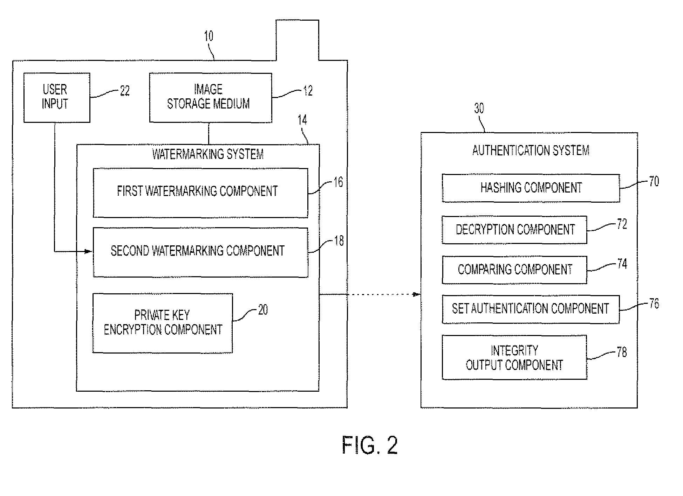

As illustrated in FIGURE 2, a system for protection and verification of the authenticity of a set of digital images includes a digital camera 10 or other digital document capturing device such as an audio or video recorder, scanner, or the like. The digital document capturing device 10 includes an image storage medium 12, such as a memory card, and may be equipped with a watermarking system 14. The watermarking system includes a first watermarking component 16 that includes code which calculates a hash value of the image file or portion thereof and embeds the hash value into the image, for example, at capture time (Steps S 114, S116, S118, S126, S128, S130). The watermarking system may include an encryption component 20 which encrypts this hash value, possibly together with other image related camera data (e.g., focusing distance, date, time, etc.) using a camera specific private key (Steps S120, S122, S124). The digital device 10 may include a user input 22 linked to an input function of the watermarking system, e.g., a "watermark set" function, which allows the user to determine when to watermark the set. In response to a user input, the second watermarking component watermarks the set by applying the second watermark(s).

With a public key corresponding to the user's private key, the image content can subsequently be authenticated by an authentication system 30 (Steps S148, S150, S152, S154). The public key may be the serial number of the camera used to generate the image or one which is obtained from the same certification authority as the private key. In one embodiment, the public key is placed in a border of the image and may be determined without decrypting techniques.

In FIGURE 2, the image generating device 10 includes both watermarking components 16, 18. Alternatively, the first and/or second watermarking components may be located remote from the camera and selectively connected thereto by a link, such as a wired or wireless link for uploading data from the image storage medium 12. The first and/or second watermarking component may be located, for example, in separate image processing device, such as a personal computer, which performs all or a part of the watermarking. The digital document capturing device 10 may include the first watermarking component, which provides the first watermark and embeds it into the document. The images are then loaded into the memory of an image processing device and a separate second watermarking component of the computer creates/embeds the second watermarks. The watermarking components may comprise suitable software for executing the watermarking steps and storing the watermarked images in the associated memory.

Several watermarking techniques for images, videos, document images, identity cards, and audio files are available.

For example, robust visual hashing generates a key-dependent secure digest which changes continuously with the input, differing at most by a small number of bits for two distinct but perceptually equivalent inputs I and I':

$$I \approx I' \quad \Rightarrow \quad H_k(I) = H_k(I')$$

$$I \leftrightarrow I' \quad \Rightarrow \quad H_k(I) \leftrightarrow H_k(I')$$

$$k \neq k' \quad \Rightarrow \quad H_k(I) \leftrightarrow H_{k'}(I')$$

where $\approx$ means visually similar images or almost the same codes,
$\leftrightarrow$ means visually different images or very different codes,
H is a hash function, and
k corresponds to a key.

Hashing of audio data files may be similarly performed.

To achieve a robust watermark, features are extracted from the document that are resistant to transformations that are defined as acceptable. For the feature extraction step, one operation step may be to define what an "acceptable" alteration is and which inputs can be considered as "perceptually equivalent." This aspect concerns both the type and the level of distortion to allow, and it may depend on the target application. Permitted distortions can include signal processing changes such as compression, image enhancement, noise addition, gray-scale conversion, scaling, and combinations of these. The features selected should be robust and invariant to the allowed distortions. Such features can be edges, color/gray-scale histograms, or discrete cosine transform (DCT) or discrete wavelet transform (DWT) coefficients. Either the low or the high frequencies can be chosen. Low frequency information (the location, faces) primarily protects the image content while high frequency information primarily protects edges (representing, for example, a car's number-plate). In the low frequency case, the scale level allows the choice of a compromise between the necessary details and the size of the image signature to embed.

An appropriate embedding algorithm is used to embed the watermark derived by the hash function or other suitable process.

The embedding of the image identifier into an image at the time of its capture enables protection of the image content as soon as possible. Alternatively, the image identifier may be created at a later stage, prior to grouping the images into a set. In addition to an image identifier, the first watermark may also contain further information, for example, information about the context in which the image was taken (photographer, camera, time, date, and the like). The first watermark may be used to provide complementary information to that provided by the second watermark from which information about that image can be obtained. Therefore, an alternative to the hash value is to simply embed the watermark information (e.g. copyright notice) extracted from the given image as either the first watermark of that image or as the second watermark of another image.

In the second stage, generally once it has been determined which images are to form the set, for example, after all the images which are to form the set have been created and/or assembled, the second watermark(s) may be embedded in the images (Steps 132, S134, S136). Removing images from or adding new images to the set at a later stage is detectable through the second watermarks of the documents in the set. This allows verification that the set is complete (Step S152). Besides set linkage data, the second watermark may also contain further information, for instance set identification information, about the purpose of the image set, the purpose of each image, or the relation between the linked images (e.g. in time and space, or with respect to specific events). The second watermark is typically embedded into the images when they are grouped together. It is to be appreciated that while reference is made to a first watermark and a second watermark, the first and second watermarks may be combined as a single watermark or the first watermark omitted.

The second watermark provides information linking the set together. This information, which allows a reviewer of the image set to link the images of the set together, can be provided in several ways. The information selected may depend on the requirements, such as security, fragility, and image quality. In one embodiment, information from one image, such as the image identifier, is incorporated into the second watermark of another image.

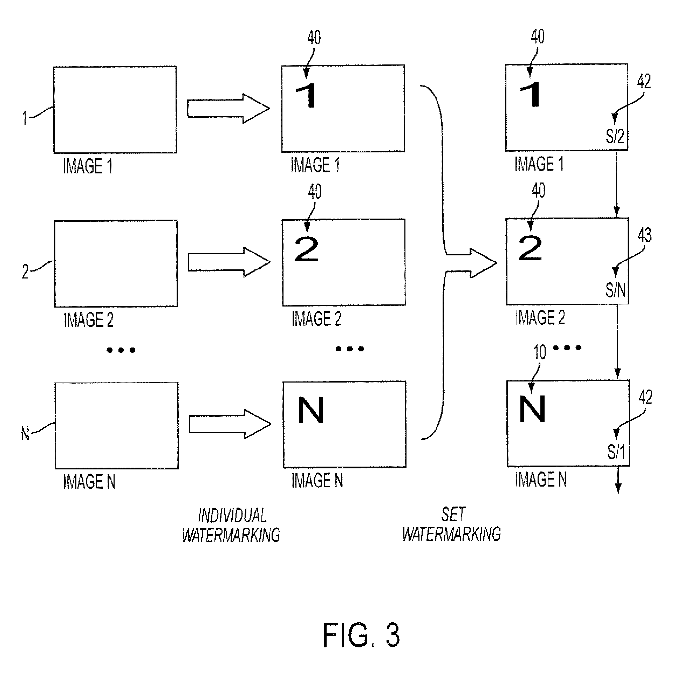

FIGURE 3 demonstrates a first watermarking system in which each image in a set of N documents, Image 1, Image 2 ... Image N, has a first watermark 40, which corresponds to the image's own image identifier embedded in the first stage (Steps S126, S128, S130). This first watermark 40 is represented by the large numerals: 1, 2, 3, ... N within each image. A second watermark 42, which contains information from another of the images in the set is added in the second stage (Steps S132, S134, S136). This second watermark 42 is represented by the smaller identifiers: S/1, S/ 2, ...S/N within each image. The numerals 1, 2, ... N, illustrated in the second watermark, identify the original image from which the second watermark was derived. As an example, for each image, the second watermark 42 comprises the image identifier of another image in the set such that every image includes a second watermark comprising the image identifier of another image. For ease of recovery, this may be the next or preceding image within the set (e.g., in terms of chronological acquisition of the image, logical sequence, or other selected sequence) although it may also be an image which is equally spaced by any predetermined number of images in the sequence from the image, such as the next but one image, or next but two image, or the like. For these purposes, the first and last documents in the set can be considered to be adjacent to each other in the sequence (i.e., every document contains the identifier of image D+X, where X is an integer). In FIGURE 3, for example, the image identifier from the next document is used in the second watermark. Other linking systems are also contemplated which allow each document in the set to be reached from any other document by following a linking pathway formed by the second watermarks.

The second watermark 42 may also include information which identifies the image from which it was derived, e.g., a reference to "image 2" in the case of image 1 in

FIGURE 3.

The second watermark 42 may also include information which enables a user or authentication system to quickly determine from which set the image was derived, i.e., a set identifier 43. In FIGURE 3, the set identifier 43 is represented by S in the second watermark 42. The set identifier may be the image identifier of one of the documents in the set, such as the first document, and/or may be a specially created identifier which provides information about the set, such as when the set was created and its content, the number of documents in the set, and/or how the images are linked through the second watermarks. Thus, for example, Image 1 includes a first watermark 40, represented by the large number 1, and a second watermark 42 comprising S/2 (i.e., the set identifier S and the image identifier of image 2). Each image thus links to every other one by referencing the next adjacent following (or preceding) image, the watermark of the last image in the set referencing the first one (or vice versa). The watermark references then build a ring on the image set.

In this first system, the second watermark 42 is different for each image. No image can be removed or added without the removal or addition being detectable through examination of the watermarks of the other images. If an image is removed from the set, this can be ascertained by examination of the watermarks of the remaining images in the set: at least one of the remaining images will have a second watermark with no corresponding image among the remaining images. Additionally, if an image is added to the set, this can also be ascertained by examination of the watermarks of the remaining images in the set: none of the remaining images will have a second watermark with a corresponding image to that of the added image.

The more documents in the set that are linked to each other, the more difficult it is to remove a document without the removal being ascertainable. Creation of a ring thus provides a secure method of protecting all the documents in the set although other methods are also contemplated. For example, two or more sub-rings may be created and linked by embedding one or more image identifiers from one sub-ring into one or more images of the second sub-ring.

For larger document files, such as video and audio files, the size of the information to be embedded may make it difficult to embed all the desired information in a single watermark within a smaller file, such as an image file, without the watermark occupying a large portion of the image. In such cases, the information from a large document file may be distributed over several other documents. Additionally, the first watermark may be omitted.

In a second watermark system, similar to the first watermarking system illustrated in FIGURE 3, the second watermark 42 contains, for each image, the identifiers of the next and of the previous images within the set. Each image thus references the following and the preceding images. The watermark references then build a double linked graph structure on the image set. In one embodiment, the graph structure can be used to represent, for example, special decomposition relations, i.e., a hierarchy. Once again, the second watermark is different for each image. For example, the decomposition relations may be: building, offices within the building, objects located in the offices, and the like. An "office" image may include, for example, a second watermark comprising information from one or all of the images of objects within that office and optionally also information from the "building" image to which it relates.

In a third system, the second watermark 42 contains a hash value computed on the set of images belonging to the set (see Steps 140, 142, S144 in FIGURE 1). The first watermark 40 may be omitted or created in the manner described above (Steps S114-S136). In this embodiment, the second watermark 42 is the same for each image belonging to the set. If a document is missing from the set, this can be ascertained by computing a combined hash value of the remaining documents and comparing this to the hash value of the second watermark of any of the remaining documents. Similarly, if a document is added to the set, the combined hash of the documents will not match that of the second watermark of any of the other documents.

In a fourth system, the second watermark 42 contains the image identifier of every image in the set. Here the second watermark is the same for each image belonging to the set. The first watermark is not necessary.

Using the watermark author's public key, any other user can read the information contained in an image set (Step S148). The user can verify that no image has been modified (Step S150), either because each image has a watermark ensuring its individual integrity (the first watermark 40) or by reference to the corresponding second watermark. The second watermark of an image can be used to insure the integrity of the image from which it was extracted since if it was modified, the extracted hash wouldn't mach the hash of another image. The user can also verify that no image has been added (Step S152), because all the images have been watermarked together, using the same private key. In one embodiment, the watermarking system 14 ensures that not even the author of the image set can modify the original watermarks at a later stage. This is feasible with existing watermarking techniques that guarantee the impossibility to change the watermark by any means once it has been embedded. The user can also verify that no image has been removed: the second watermark embedded in each image allows the user to verify the completeness of the set (Step S152). For example if the ring structure has been used it can easily be seen if the ring is not closed, by following the links to the other documents using the second watermark. Or, if the hash value of the images belonging to the set has been used, the user can verify if the hash value of the provided images corresponds. During the checking process, the hash functions are applied again to the individual documents and the obtained signature values are compared with the ones extracted from the embedded watermarks (Step S150). For instance the watermark extracted from image 1 must match the signature calculated for document 2 (and so on) to prove its integrity. The user can use the set identifier to identify the other images in the same set. Where multiple documents have been removed and/or replaced, it may not be possible for the recipient to identify all the additions/removals, but for most purposes, it may be sufficient to determine whether or not the integrity of the set has been compromised. The recipient can also recover at least a portion of the original content (the hash value, e.g., thumbnail) of images that have been removed or modified, using the corresponding second watermark, provided that the document(s) in which it has been embedded are not all missing from the set.

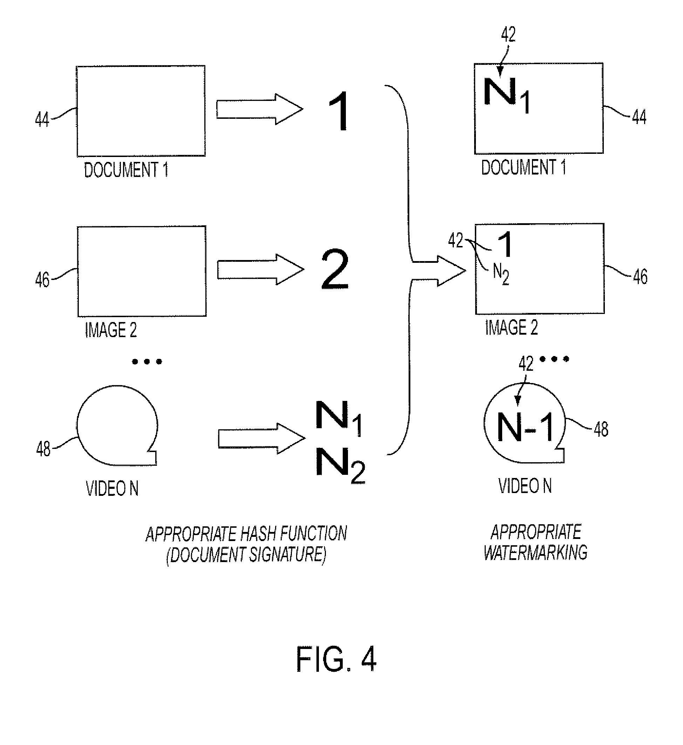

FIGURE 4 shows a similar watermarking system to that FIGURE 3 which demonstrates the protection of sets of digital documents of different types. For example, a document text image 44 (Document 1), natural scene image 46 (Image 1), and a video sequence 48 (Video N) are combined into one set. In a first stage (Steps S114, S116, S118), different hash functions calculate appropriate signature values for these different documents and data types. In this embodiment, no first watermark is created. Appropriate watermarking methods (video, document text image, natural scene image, and so forth) are then applied to embed these hash values each time into the subsequent document as a linking watermark 42 to create the ring structure (Steps S132, S134, S136). Since the video 48 contains a large amount of information, two or more hashes $N_1$, $N_2$ may be created for the video, based on different portions of the video, with the first hash $N_1$ incorporated into Document 1 as its linking watermark 42 and the second hash $N_2$ incorporated into Image 2 as a linking watermark 42. In this case, Image 2 contains two linking watermarks 42.

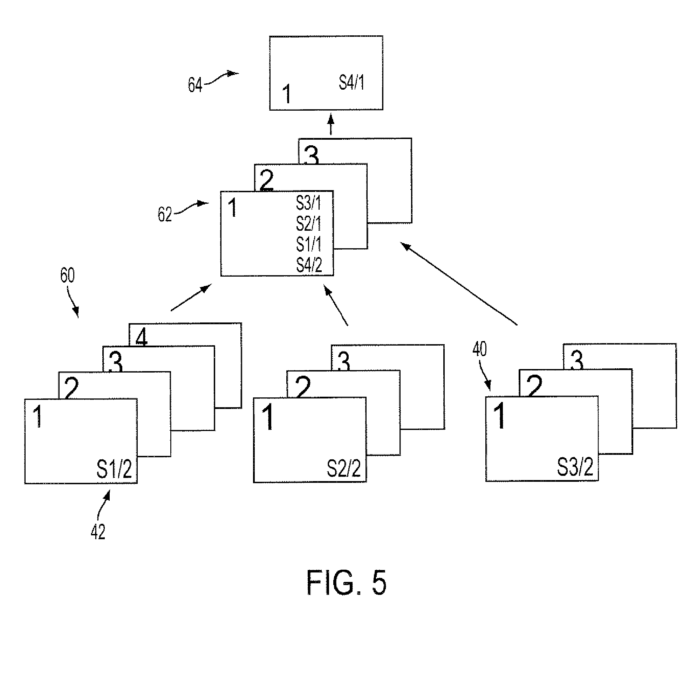

The watermarking methods described herein can also be recursively employed to protect a hierarchical set structure, where sets in turn can be grouped into higher-level sets, as illustrated in FIGURE 5. At each higher-level set-grouping step it may be sufficient to watermark only one image from each lower-level member set with the higher-level group watermark, or vice versa. At the lowest level 60, all member images are linked through the corresponding set watermark 43, whereas at the higher levels 62, 64, the sets can be linked at each time through one lower-level set member image. This is sufficient to verify the completeness of a set hierarchy and to reconstruct it as long as no image is missing.

Once the set has been protected, it can be distributed to other users, including court officials, opposing counsel, information handling services, and the like with the assurance that tampering with the set can be detected.

For authentication of the image file, the authentication system 30 (FIGURE 2) includes a hashing component 70 for hashing the image file in question which produces a checking hash and a decrypting component 72 for decrypting the first watermark 40 using the public key to reveal the true hash produced by the digital camera system 10 from the true image file. The authentication system further includes a comparing component 74 for comparing the checking hash with the true hash to check for a match. If the two hashes match, it can be certain that the image file is authentic, i.e., that the image file has not been altered. The authentication system may also include a set authentication component 76 which determines that the set is complete. For example, the set authentication component determines that each image in the set has a true hash which corresponds to a checking hash of a second watermark in the set. The set authentication component 76 may use information in the second watermark to determine which image in the set the second watermark corresponds to. For example, the watermark 42 in image 1 may include information which indicates that the image file from which it was created is image 2 of the set.

If an individual image being authenticated has been altered, the checking and true hashes will not closely match and the image's authenticity is indicated as not being affirmed by an image authenticity output signal from an integrity output component 78. Otherwise, the authentication system indicates the authenticity of the image by an image authenticity output signal. If the integrity of the set has been compromised, the lack of integrity is indicated as not being affirmed by a set integrity output signal. Otherwise, the integrity output component 78 of the authentication system indicates the integrity of the set by a set integrity output signal.

The following scenario exemplifies one use of the technology. In this example, a claim investigator is working on a car accident. The investigator has obtained a private and a public key from a Certificate Authority. He brings his digital camera or phone camera to the accident location and takes a number of pictures of the scene. Once he is finished, he chooses the "watermark set" function on the camera to create a set. This triggers the set watermarking process, which uses the claim investigator's private key. From now on, the set of images is secured and cannot be tampered with. Using the claim investigator's public key, which is available from the Certificate Authority, any other user can check that the image set has been produced by this particular investigator, and that all the relevant pictures are there with their original content.

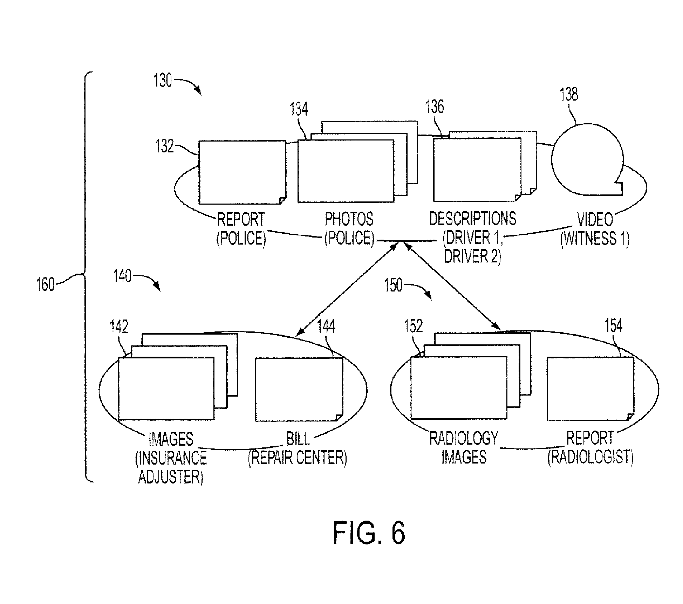

FIGURE 6 represents a similar scenario where multiple sets of documents relating to the same event, in this case a car accident in which one of the passengers is injured, are watermarked. A first set 130 of documents contains documents collected directly after the accident. This set includes documents containing different digital media: a police report 132, photographic images 134 taken by the police at the scene of the accident, text reports 136 comprising descriptions of the accident made by the two drivers involved in the accident, and a video 138, made by a witness to the accident. A second set 140 of documents includes photographic images 142 taken by an insurance adjuster and a text document 144 comprising a bill from the repair center, generated subsequent to the event. A third set 150 contains documents concerning the injured person, collected again independently. The third set includes radiology images 152 and a report 154 of the radiologist. All these related sets can be successively and independently created and linked together into a hierarchy 160 comprising a plurality of sets 130, 140, 150.

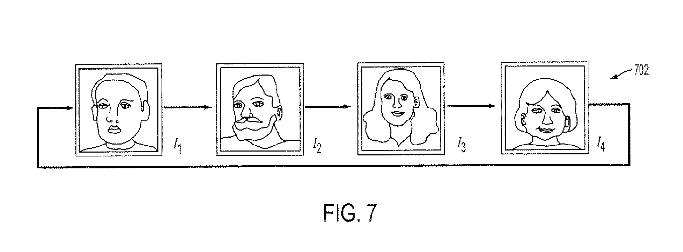

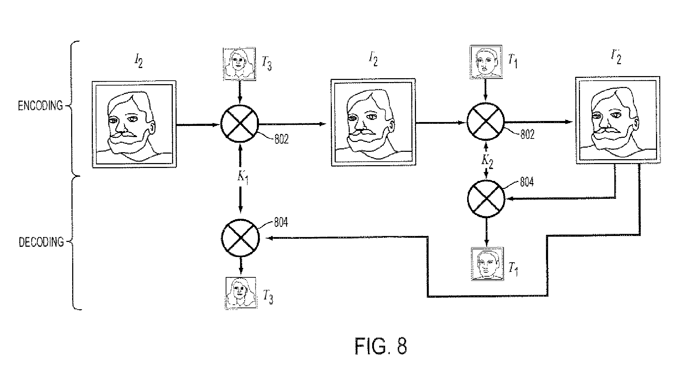

FIGURES 7 and 8 illustrate an example of the different embodiments presented herein. FIGURE 7 illustrates a sequence of four images $I_1$, $I_2$, $I_3$, and $I_4$ that are to be watermarked to permit the integrity of the collection of images 702 to be preserved. FIGURE 8 illustrates a manner of encoding and decoding watermarks for the image $I_2$ in the collection of images 702 using a thumbnail $T_3$ of the subsequent image $I_1$ in the sequence $I_1$ - $I_4$ and a thumbnail $T_3$ of the preceding image $I_3$ in the sequence $I_1$ - $I_4$. The other images in the sequence $I_1$ - $I_4$ may be similarly encoded and decoded with watermarks.

In the illustrated example in FIGURE 8, a watermarking encoder 802 encodes using a first encode/decode key

$K_1$ the thumbnail $T_3$ in the image $I_2$ to produce the watermarked image $I'_2$. Subsequently in FIGURE 8, the watermarking encoder 802 encodes using a second encode/decode key $K_2$ the thumbnail $T_1$ in the watermarked image $I'_2$ to produce the watermarked image $I''_2$.

The resulting watermarked image $I''_2$ may be distributed together with the other images in the sequence 702 that are similarly watermarked. The completeness the collection 702 may be examined by extracting the one or more watermarks in the images. In decoding the watermarks, the watermark decoder 804 decodes the thumbnail $T_3$ of the subsequent image $I_3$ in the sequence $I_1$ - $I_4$ from the watermarked image $I''_2$ using the encode/decode key $K_1$. Similarly, the watermark decoder 804 decodes the thumbnail $T_1$ of the preceding image $I_1$ in the sequence $I_1$ - $I_4$ from the watermarked image $I''_2$ using the encode/decode key $K_2$.

It will be appreciated that in this example, the sequence of images may be determined by adding only one watermark (e.g., either of the preceding or subsequent image's identifying information or thumbnail) to the images in the sequence $I_1$ - $I_4$ to identify the collection 702 (e.g., by using only the first watermarked image $I'_2$), to provide a single chain as opposed to a double chain. Further it will be appreciated that in the example shown in FIGURE 8, the watermark decoder 804 should not be sensitive to noise introduced in the watermarked image $I''_2$ when decoding the thumbnail $T_3$. Thus, depending on the susceptibility of the watermark decoder to noise, even more than two watermarks may be added to an original image.

It will also be appreciated that the order of the chains may be reversed. In addition, it will be appreciated that in the example in FIGURE 8, the resulting watermarked image $I'_2$ or $I''_2$ may be watermarked with identifying information of the image original image $I_1$ (e.g., a copyright notice, a date on which the document was created, the position at which the document was created, or sensitive information in the image susceptible to modification such as a date, a signature, an amount etc.) instead of or in addition to being watermarked with one of the thumbnails $T_1$ or $T_3$. Also, it will be appreciated in this example that instead of using one encoder/decoder pair 802/804 and two encode/decode keys $K_1$ and $K_2$, a single encode/decode key may be used with two different watermarking encoders/decoders.

**Claims**

1. A digital watermarking method comprising:

    for each of the digital documents in a set of digital documents:

       1. extracting information from the document,
       2. incorporating the information into a watermark, and
       3. embedding the watermark into at least one other document in the set.

2. The method of claim 1, wherein the extracting of the information from the document includes applying a hash function to at least a portion of the document to form a hash.

3. The method of claim 2, wherein applying the hash function includes applying the hash function to a plurality of the documents in the set to form the hash.

4. The method of claim 2 or claim 3, further comprising encrypting the hash function with a private key, the private key being associated with a public key for decrypting the encrypted hash function.

5. The method of any of the preceding claims, wherein the documents in the set are considered to form a sequence, the first and last documents being considered to be adjacent in the sequence and for each document in the set, the embedded watermark being derived from a document which is equally spaced in the sequence from the document.

6. The method of claim 5, wherein the embedded watermarks form a ring in which each document in the set is embedded with a watermark derived from at least one of the preceding document in the set and the subsequent document in the set.

7. The method of any of claims 1 to 4, wherein each document in the set includes a watermark derived from at least a different one of another document in the set.

8. The method of any of the preceding claims, further comprising:

    embedding in each document an image identifier generated by extracting information from the document and incorporating the information into the image identifier.

9. The method of any of the preceding claims, wherein the embedded information relating to the document includes at least one of a copyright notice, a global positioning system location, and a date on which the document was created.

10. The method of any of the preceding claims, wherein documents in the set are in the form of images, text, video, audio, and combinations thereof.

11. A method for determining the integrity of a set of digital documents which have digital watermarks embedded by a method according to any of the preceding claims, comprising:

   from the embedded watermark of at least one of the plurality of digital documents, determining at least one of:

   whether a document from which information was extracted is missing from the set,

   whether a document has been unacceptably modified; and
   whether a document has been added to the set subsequent to the embedding of the watermarks.

12. The method of claim 11, further comprising:

   recovering information for a document which is missing from the set orwhich has been unacceptably modified, from the watermark associated with the at least one other document in the set.

13. A digital watermarking system comprising:

   a first watermarking component which, for each of the documents in a set of digital documents, derives a digital watermark from information in the document; and
   a second watermarking component which embeds the digital watermark in another document in the set.

14. The system of claim 13, wherein the first watermarking component forms a part of a digital document capturing device and wherein the first watermarking component extracts the information from the document at the time of generation of the document.

15. The system of claim 13 or claim 14, wherein the digital document capturing device is selected from the group consisting of cameras, video recorders, audio recorders, scanners, and combinations thereof.

16. The system of any of claims 13 to 15, further comprising:

   an authentication system which determines whether the set is complete by examination of the embedded watermarks of remaining documents in the set.

FIG. 1

FIG. 2

FIG. 3

# FIG. 4

FIG. 5

FIG. 6

FIG. 7

FIG. 8

**European Patent Office**

**EUROPEAN SEARCH REPORT**

Application Number

EP 06 11 2794

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2003/223614 A1 (ROBINS MARK NELSON ET AL) 4 December 2003 (2003-12-04) * paragraphs [0004], [0026], [0039] - [0041]; figure 3 * ----- | 1-16 | INV. H04N1/32 |
| Y | US 2001/042206 A1 (CARRO FERNANDO INCERTIS ET AL) 15 November 2001 (2001-11-15) * paragraphs [0019] - [0021] * ----- | 1-16 | |
| A | US 2003/025423 A1 (MILLER MARC D ET AL) 6 February 2003 (2003-02-06) * paragraphs [0020] - [0025] * ----- | 1,11,13 | |

TECHNICAL FIELDS
SEARCHED (IPC)

H04N
G06T

The present search report has been drawn up for all claims

| Place of search | Date of completion of the search | Examiner |
|---|---|---|
| Berlin | 21 July 2006 | Exner, A |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**EP 1 718 060 A1**

## ANNEX TO THE EUROPEAN SEARCH REPORT
## ON EUROPEAN PATENT APPLICATION NO.

EP 06 11 2794

This annex lists the patent family members relating to the patent documents cited in the above-mentioned European search report.
The members are as contained in the European Patent Office EDP file on
The European Patent Office is in no way liable for these particulars which are merely given for the purpose of information.

21-07-2006

| Patent document cited in search report | Publication date | Patent family member(s) | Publication date |
|---|---|---|---|
| US 2003223614 A1 | 04-12-2003 | NONE | |
| US 2001042206 A1 | 15-11-2001 | FR 2808948 A1 | 16-11-2001 |
| US 2003025423 A1 | 06-02-2003 | NONE | |

EPO FORM P0459

For more details about this annex : see Official Journal of the European Patent Office, No. 12/82

20

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5499294 A
- US 6269446 A
- US 6664976 A